# EUROPEAN PATENT APPLICATION

(11) **EP 2 910 974 A1**
(43) Date of publication of application: **26.08.2015**
(21) Application number: 13846553.9
(22) Date of filing: 21.05.2013
(51) Int. Cl.: G01S 17/89, G01S 7/486, G08G 1/16

(54) **LASER MONITORING METHOD AND LASER MONITORING DEVICE**

(30) Priority: 19.10.2012 JP 2012231703
(71) Applicant: IHI Corporation, Tokyo 135-8710 (JP)
(72) Inventor: NAGATA, Kouichirou, Tokyo 135-8710 (JP); HISAMITSU, Yutaka, Tokyo 135-8710 (JP); SEKIMOTO, Kiyohide, Tokyo 135-8710 (JP); SHIRAKI, Hirofumi, Tokyo 135-8710 (JP); KANESAKA, Kaoru, Tokyo 135-8710 (JP)
(74) Representative: Epping - Hermann - Fischer
(86) International application number: PCT/JP2013/064063
(87) International publication number: WO 2014/061300

(57) **Abstract**

A laser monitoring method is provided in which a laser light L is irradiated while scanning in a horizontal direction and in a vertical direction of a monitoring range S, reflected light R of the laser light L is received and received light information d8 is obtained, distance information d9 of a target object M within the monitoring range S is calculated from the received light information d8, and an intended target object M is detected from the distance information d9. If a plurality of pieces of reflected light R are received from the same laser light L, two pieces of received light information d8 are selected from the received light information d8 of the plurality of pieces of reflected light R and first distance information d91 and second distance information d92 are calculated, a first monitoring image I1 is generated on the basis of the first distance information d91, while a second monitoring image 12 is generated on the basis of the second distance information d92, and the target object M is detected from both the first monitoring image I1 and the second monitoring image 12.

## Description

### Technical Field

The present invention relates to a laser monitoring method and a laser monitoring device and particularly to a laser monitoring method and a laser monitoring device suitable for processing if a plurality of pieces of reflected light are received with respect to single laser light.

### Background Art

In an obstacle detecting device or a monitoring system at an intersection or a railroad crossing, a distance measurement device using a laser radar is employed in many cases. Such distance measurement device has a light projecting portion for projecting laser light, a light receiving portion for receiving reflected light of the laser light and transmitting a light reception signal, and a signal processing portion for calculating distance data of an object from the light reception signal (see Patent Document 1, for example).

### Prior Art Document

### Patent Document

Patent Document 1: Japanese Patent Laid-Open No. 2002-140790

### Summary of the Invention

### Problems to be solved by the Invention

In the monitoring system using the laser distance measurement device, a monitoring range might be set to a location including a parking lot or a building, and there might be a transmissive object (windshield of a vehicle, a window pane of a building and the like) which transmits a part of the laser light within the monitoring range. In such a case, since two pieces of reflected light (the one reflected on a surface of the transmissive object and the one reflected in the depth of the transmissive object) are detected with respect to single laser light, determination on which data should be employed is difficult with the above-described device described in Patent Document 1, and there is a problem that an intended target object cannot be detected accurately.

Moreover, the laser light is a light flux having a certain diameter and has a tendency of being diffused (the diameter is enlarged) as it gets far from a light source, and the longer a distance is from the light source to the monitoring range, the larger the diameter of the reaching laser light becomes. Therefore, if a building is present on an irradiation line of the laser light or small particles such as snow or mist (steam) are present, a part of a sectional area of the laser light is reflected by an edge part of the building or the particle, while the remaining part is further reflected by the object present on the back thereof, and the laser distance measurement device receives a plurality of pieces of reflected light from the single laser light. In such cases, too, the problem similar to the above can occur.

The present invention was made in view of the above-described problems and has an object to provide a laser monitoring method and a laser monitoring device which can easily detect an intended target object even if a plurality of pieces of reflected light are received with respect to single laser light.

### Means for Solving the Problems

According to the present invention, a laser monitoring method is provided in which a laser light is irradiated while scanning in a horizontal direction and in a vertical direction of a monitoring range, reflected light of the laser light is received and received light information is obtained, distance information of a target object within the monitoring range is calculated from the received light information, and an intended target object is detected from the distance information, if a plurality of pieces of reflected light are received from the same laser light, two pieces of received light information are selected from the received light information of the plurality of pieces of reflected light and first distance information and second distance information are calculated, a first monitoring image is generated on the basis of the first distance information, while a second monitoring image is generated on the basis of the second distance information, and the target object is detected from both the first monitoring image and the second monitoring image.

Moreover, according to the present invention, in a laser monitoring device having a laser distance measurement device which scans and irradiates a laser light in a horizontal direction and in a vertical direction of a monitoring range, receives reflected light of the laser light and obtains received light information and calculates distance information of a target object within the monitoring range from the received light information and a control device for detecting an intended target object from the distance information, a laser monitoring device is provided in which, if a plurality of pieces of reflected light are received from the same laser light, the laser distance measurement device selects two pieces of received light information from the received light information of the plurality of pieces of reflected light and calculates first distance information and second distance information, and the control device generates a first monitoring image on the basis of the first distance information, generates a second monitoring image on the basis of the second distance information, and detects the target object from both the first monitoring image and the second monitoring image.

In the above-described laser monitoring method and laser monitoring device, if a part having the second distance information and a part not having it are mixed within the monitoring range, the second monitoring image may be generated by using the second distance information for the part having the second distance information, while by using the first distance information for the part not having the second distance information.

Moreover, if the second monitoring range for which presence of the second distance information is to be detected is present within the monitoring range, the second monitoring image may be generated by extracting only the second distance information in the second monitoring range.

### Advantageous Effects of the Invention

According to the above-described laser monitoring method and laser monitoring device of the present invention, even if a plurality of pieces of reflected light are received from the same laser light, by selecting two pieces of the distance information and by generating the respective monitoring images on the basis of each distance information, there is no need of processing which of the distance information should be employed, and the intended target object can be easily detected.

### Brief Description of the Drawings

FIG. 1 is an entire configuration diagram illustrating a laser monitoring device according to an embodiment of the present invention.
FIG. 2A is an entire view of a monitoring range illustrating an action of the laser monitoring device illustrated in FIG. 1.
FIG. 2B is a sectional view of a vehicle present within the monitoring range illustrating the action of the laser monitoring device illustrated in FIG. 1.
FIG. 3A is a view illustrating an example of a first monitoring image.
FIG. 3B is a view illustrating an example of a second monitoring image.
FIG. 4 is a flowchart illustrating a laser distance measurement method according to the embodiment of the present invention.

### Mode for Carrying out the Invention

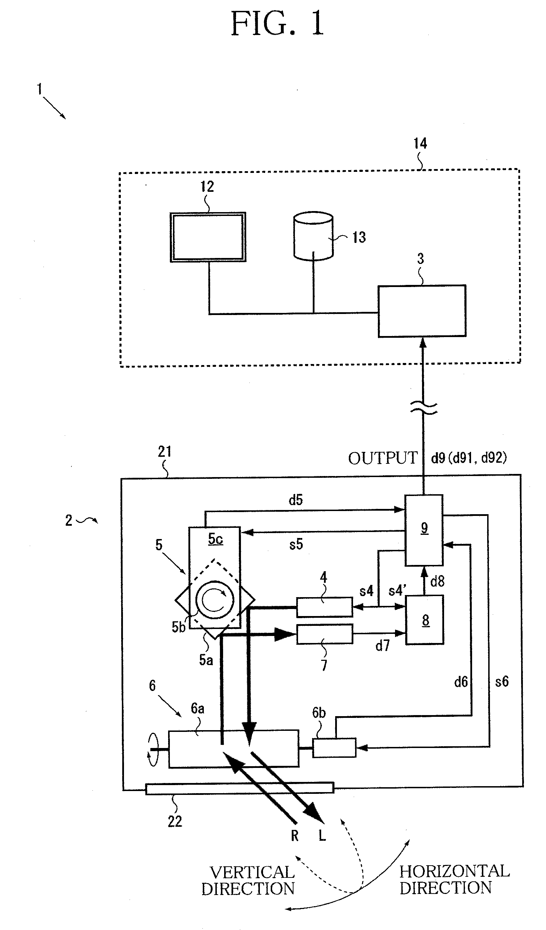

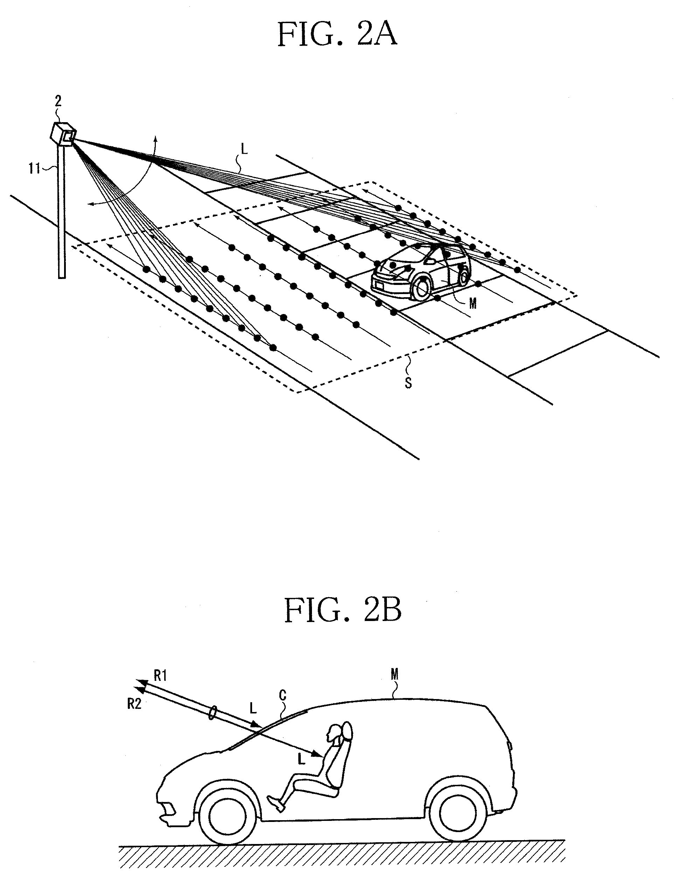

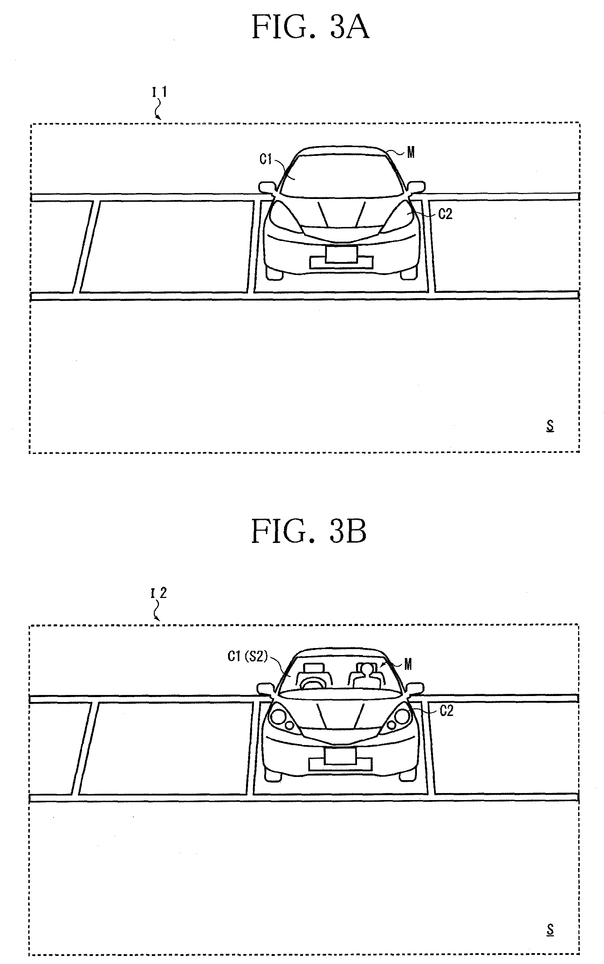

An embodiment of the present invention will be described below by using the attached drawings. Here, FIG. 1 is an entire configuration diagram illustrating a laser monitoring device according to an embodiment of the present invention. FIGs. 2A and 2B are views illustrating an action of the laser monitoring device illustrated in FIG. 1, in which FIG. 2A is an entire view of a monitoring range, and FIG. 2B is a sectional view of a vehicle present within the monitoring range. FIGs. 3A and 3B are views illustrating an example of a monitoring image, in which FIG. 3A illustrates a first monitoring image, and FIG. 3B illustrates a second monitoring image.

A laser monitoring device 1 according to an embodiment of the present invention has, as illustrated in FIGs. 1, 2A, 2B, 3A, and 3B, a laser distance measurement device 2 which irradiates a laser light L in a horizontal direction and in a vertical direction of a monitoring range S while scanning, receives reflected light R of the laser light L and obtains received light information d8, and calculates distance information d9 of a target object M within the monitoring range S from the received light information d8 and a control device 3 for detecting the intended target object M from the distance information d9, and if a plurality of pieces of the reflected light R are received from the same laser light L, the laser distance measurement device 2 is configured to select two pieces of the received light information from the received light information d8 of the plurality of pieces of reflected light R and to calculate first distance information d91 and second distance information d92, and the control device 3 is configured to generate a first monitoring image I1 on the basis of the first distance information d91 and to generate a second monitoring image 12 on the basis of the second distance information d92 and to detect the target object M from both the first monitoring image I1 and the second monitoring image 12.

The laser distance measurement device 2 has a light projecting portion 4 which receives a light projection signal s4 and projects the laser light L, horizontal scanning means 5 for scanning the laser light L in the horizontal direction, vertical scanning means 6 for scanning the laser light L in the vertical direction, a light receiving portion 7 for receiving the reflected light R of the laser light L and transmitting a light reception signal d7, a time measuring portion 8 for calculating a time difference from the light projection signal s4 (light emission synchronous signal s4') and the light reception signal d7 and transmitting the received light information d8, a signal processing portion 9 for calculating the distance information d9 of the target object M from the received light information d8, a casing 21 for accommodating constituent devices, that is, the light projecting portion 4 to the signal processing portion 9, and an irradiation window 22 transmitting the laser light L and the reflected light R. Moreover, the laser distance measurement device 2 is installed on a support 11 installed upright beside the monitoring range S set in a parking lot or the like as illustrated in FIG. 2A, for example.

The light projecting portion 4 is a component which emits and irradiates the laser light L. Such light projecting portion 4 is composed of a laser diode which becomes a light source, a light projecting lens which collimates the laser light L, and an LD driver for operating the laser diode, for example. The LD driver operates the laser diode so that the laser light L is emitted on the basis of the light projection signal s4 from the signal processing portion 9. The LD driver transmits the light emission synchronous signal s4' in a pulse state to the time measuring portion 8 at the same time as the emission of the laser light L.

The horizontal scanning means 5 is a polygon scanner, for example, and has a polygon mirror 5a with four side surfaces of a hexahedron made into mirror surfaces, a driving motor 5b for rotating the four mirror-surfaced side surfaces in a predetermined direction, and a housing 5c supporting the polygon mirror 5a and the driving motor 5b. By rotating the four mirror-surfaced side surfaces, the laser light L projected in a pulse state from the light projecting portion 4 has an angle in the horizontal direction polarized and scanned in the horizontal direction of the monitoring range S.

The polygon mirror 5a is rotated at a high speed by the driving motor 5b using centers of a pair of two surfaces not made into mirror surfaces as rotating axes. The driving motor 5b is operated by a motor driver (not shown). The motor driver controls a rotating speed of the driving motor 5b on the basis of a speed instruction s5 transmitted from the signal processing portion 9. Moreover, the motor driver transmits angle information d5 of the polygon mirror 5a to the signal processing portion 9. Such configuration of the horizontal scanning means 5 is only an example and is not limited to the illustrated configuration.

The vertical scanning means 6 is a galvanoscanner, for example, and has a swing mirror 6a which is a plane mirror and a driving motor 6b for making a mirror surface of the swing mirror 6a swing. By making the swing mirror 6a swing, the laser light reflected by the polygon mirror 5a has an angle in the vertical direction deflected and scanned in the vertical direction of the monitoring range S.

The swing mirror 6a is made to swing by the driving motor 6b using a center axis in the horizontal direction as a swing axis. The driving motor 6b is operated by a motor driver (not shown). The motor driver controls a swing direction and a swing speed of the driving motor 6b on the basis of a speed instruction s6 transmitted from the signal processing portion 9. Moreover, the motor driver transmits angle information d6 of the swing mirror 6a to the signal processing portion 9. Such configuration of the vertical scanning means 6 is only an example and is not limited to the illustrated configuration.

The light receiving portion 7 is a component receiving the reflected light R of the laser light L irradiated to the target object M. Here, the light projecting portion 4 and the light receiving portion 7 are provided separately and configured such that a light projecting axis and a light receiving axis are deviated from each other, but they may be configured such that the light projecting axis and the light receiving axis match each other. Such light receiving portion 7 is composed of a light receiving lens for collecting the reflected light R and a light receiving portion body having a photoelectric conversion element for receiving the collected reflected light R and converting it to a voltage and devices for applying processing such as amplification, compression, decoding and the like.

The reflected light R having transmitted through the irradiation window 22 is led to the light receiving lens through the swing mirror 6a and the polygon mirror 5a similarly to the projected laser light L. Then, the light receiving portion body having received the reflected light R transmits the light reception signal d7 having been converted to a voltage value to the time measuring portion 8. The light reception signal d7 includes light receiving intensity and light receiving time. The photoelectric conversion element is a component also called a light receiving element, and a photodiode is used, for example.

The time measuring portion 8 is a component for generating the received light information d8 of the reflected light R reflected by the target object M within the monitoring range S. The time measuring portion 8 measures time T from emission of the laser light L to reception of the reflected light R from the light emission synchronous signal s4' received from the signal processing portion 9 and the light reception signal d7 received from the light receiving portion 7 and calculates a distance from the laser distance measurement device 2 to a measurement point within the monitoring range S on the basis of the time T and generates distance data. The distance data is associated with the light emission synchronous signal s4' and the light reception signal d7 and transmitted as the received light information d8 to the signal processing portion 9. The distance to the measurement point is specifically assigned to a value half of a flying distance of the laser light (reciprocating distance of the laser light) calculated from the time T and the laser light speed. At this time, accuracy of the received light information d8 may be improved by geometrically calculating the flying distance in the laser distance measurement device 2 (a traveling distance of the laser light from the light projecting portion 4 to the swing mirror 6a and the like) and by subtracting it.

The signal processing portion 9 is a component for controlling the horizontal scanning means 5 and the vertical scanning means 6 and for generating the distance information d9 from the received light information d8 and for outputting it to the outside. The signal processing portion 9 transmits the light projection signal s4 to the light projecting portion 4, transmits the light emission synchronous signal s4' to the time measuring portion 8, transmits the speed instruction s5 to the horizontal scanning means 5, and transmits the speed instruction s6 to the vertical scanning means 6. The signal processing portion 9 also receives the angle information d5 from the horizontal scanning means 5, the angle information d6 from the vertical scanning means 6, and the received light information d8 from the time measuring portion 8. Moreover, the signal processing portion 9 generates the distance information d9 by associating the distance data of the measurement point included in the received light information d8 with the angle information d5 of the horizontal scanning means 5 and the angle information d6 of the vertical scanning means 6 and outputs the result to the control device 3.

There might be a transmissive object C (windshield of a vehicle, a window pane of a building and the like) which reflects a part of the laser light L within the monitoring range S and transmits the remaining part, and two pieces of reflected light R (the one reflected on a surface of the transmissive object C and the one reflected in the depth of the transmissive object C) might be detected with respect to single laser light L.

Moreover, the laser light L is a light flux having a certain diameter and has a tendency of being diffused (the diameter is enlarged) as it gets far. Therefore, the longer a distance of the monitoring range S is, the larger the diameter of the reaching laser light L becomes, and there might be an obstacle such as a building, a signboard and the like or particles such as rain, snow, mist (steam), hail, dust and the like while the laser light L reaches the measurement point of the monitoring range S. Hereinafter, these obstacles and particles are collectively referred to as "foreign substances". If such foreign substances are present, a part of a sectional area of the laser light L is reflected by the whole or a part (an edge part) of the foreign substance, while the remaining part is further reflected by the foreign substances or the target object M present on the back thereof, and a plurality of pieces of reflected light R are received from the single laser light L (that is, the same laser light L).

In general, the light receiving portion 7 transmits all the received light reception signals d7 to the time measuring portion 8, and the time measuring portion 8 selects the light reception signal d7 required for generation of the received light information d8. The time measuring portion 8 removes a noise, chooses the light reception signal d7 and generates the received light information d8 on the basis of conditions such that light reception intensity is lower than a predetermined threshold value, the light reception intensity is higher than the predetermined threshold value, the distance data is shorter than the predetermined threshold value, the distance data is longer than the predetermined threshold value and the like, for example.

The signal processing portion 9 receives the angle information d5 and d6 of the horizontal scanning means 5 and the vertical scanning means 6 and thus, determines that the received light information d8 in which the angle information d5 of the horizontal scanning means 5 matches the angle information d6 of the vertical scanning means 6 is the reflected light R from the same laser light L. If a plurality of pieces of reflected light R are detected from the same laser light L, the signal processing portion 9 chooses the received light information d8 so that a state in which a maximum of two pieces of reflected light R are detected with respect to the single laser light L is obtained.

For example, the signal processing portion 9 executes processing so that a state in which a maximum of two pieces of reflected light R are detected with respect to the single laser light L is obtained by extracting the two pieces of reflected light R (pulse) with the higher light reception intensity from the top with respect to the single laser light L or by removing inappropriate pulse waveform of the reflected light R (instantaneous pulse or the like). After that, the signal processing portion 9 calculates the first distance information d91 and the second distance information d92 from these two received light information d8. If only one reflected light R is detected with respect to the single laser light L, only the first distance information d91 is calculated.

The above-described laser monitoring device 1 has the control device 3 for receiving output data (distance information d9) from the laser distance measurement device 2, a monitoring monitor 12 for displaying a monitoring image I of the monitoring range S on the basis of the output data (distance information d9), and a storage device 13 for storing the output data (distance information d9) and the monitoring image I. Here, the "monitoring image" may be a still image or a moving image and is intended to mean a monitoring image. The control device 3, the monitoring monitor 12, and the storage device 13 are arranged in a building 14 installed at a place away from the monitoring range S in many cases. Transfer of the output data (distance information d9) from the laser distance measurement device 2 to the control device 3 may be in a wired manner or wirelessly.

As illustrated in FIG. 2A, a case in which the laser monitoring device 1 is installed in a parking lot is considered. By installing the laser monitoring device 1 in the parking lot, presence of a vehicle, presence of a pedestrian, presence of a suspicious person or the like in the parking space can be detected. As illustrated in FIG. 2B, a windshield is generally arranged on a front surface of the vehicle and this windshield corresponds to a transmissive object C which reflects a part of the laser light L and transmits the remaining part.

Therefore, the laser distance measurement device 2 receives reflected light R1 reflected by the windshield and reflected light R2 reflected by an object in the vehicle (an occupant, a seat or the like) with respect to the same laser light L, and the reflected light R1 and R2 with two pulses are detected from the laser light L with one pulse. Then, the received light signal d7 of the reflected light R1 is output to the control device 3 finally as the first distance information d91 and the received light signal d7 of the reflected light R2 is output to the control device 3 finally as the second distance information d92.

The control device 3 generates the first monitoring image I1 on the basis of the first distance information d91 as illustrated in FIG. 3A. At this time, from a windshield part C1 and a front light part C2 of the target object M (vehicle), glass on the surface (transmissive object C) is detected. Moreover, the control device 3 generates the second monitoring image 12 on the basis of the second distance information d92 as illustrated in FIG. 3B. At this time, an object (an occupant, a seat or the like) inside the windshield part C1 and an object (light bulb) inside the front light part C2 are detected.

Within the monitoring range S illustrated in FIGs. 3A and 3B, a part having the second distance information d92 (the windshield part C1 and the front light part C2) and a part not having it (a part other than the windshield part C1 and the front light part C2) are mixed. In this case, if the second monitoring image 12 is generated by using only the second distance information d92, the monitoring image I only of the windshield part C1 and the front light part C2 is generated, and the part other than the windshield part C1 and the front light part C2 is not drawn.

Thus, the second monitoring image 12 as illustrated can be obtained by generating the combined monitoring image I using the second distance information d92 for the windshield part C1 and the front light part C2 and using the first distance information d91 for the other parts. That is, if the part having the second distance information d92 and the part not having it are mixed within the monitoring range S, the control device 3 is configured to use the second distance information d92 for the part having the second distance information d92 and to use the first distance information d91 for the part not having the second distance information d92 so as to generate the second monitoring image 12.

Here, the front light part C2 is a part having the transmissive object C, but there is a part in which the intended target object M is not present on its back surface (depth side). Therefore, this front light part C2 is a part for which the monitoring image I does not have to be generated, and it is only necessary that the monitoring image I of the windshield part C1 is generated.

Thus, by setting the windshield part C1 to a second monitoring range S2 and by excluding the front light part C2 from the second monitoring range S2, the back surface (depth side) of the front light part C2 can be excluded from monitoring target objects. That is, if there is the second monitoring range S2 within the monitoring range S for which presence of the second distance information d92 is to be detected, the control device 3 is configured to extract only the second distance information d92 in the second monitoring range S2 so as to generate the second monitoring image 12. At this time, it is preferable that the second monitoring image 12 is generated by using the first distance information d91 for the part other than the second monitoring range S2.

The above-described laser monitoring device 1 might have the transmissive object C such as a window pane, wall surfaces of a glass-walled building and the like within the monitoring range S even if the monitoring range S is installed in a place other than the parking lot, that is, general roads, intersections, railroad crossings, prohibited areas, wall surfaces of a building (wall surfaces having a window and an entrance) and the like. For example, the above-described laser monitoring device 1 can be used for detection of the target object M such as a pedestrian, a vehicle or the like crossing the back surface (back side) of these transmissive objects C and jumping out to the road or the like or for detection of a suspicious person (target object M) who intrudes into a place into which entry is not allowed (a prohibited area, a building at midnight and the like).

Moreover, if an object staying at the same position at all times such as a building, a signboard or the like is included in the monitoring range S, its edge part (corner part) might need to be grasped in order to confirm that the object is located at the same position. In such a case, the first reflected light R1 is reflected light from the edge part of the object and the second reflected light R2 is reflected light from another target object M in usual.

However, if there are small particles such as snow and mist (steam) within the monitoring range S, the laser light L is reflected by these particles, and the reflected light from the edge part (corner part) of the object might become the second reflected light R2. Even in this case, by monitoring both the first monitoring image I1 and the second monitoring image 12, the edge part (corner part) of the object can be easily grasped. Moreover, by grasping the edge part (corner part) of the object by the second monitoring image 12, presence of a foreign substance (snow or the like) in front of the object can be also easily grasped.

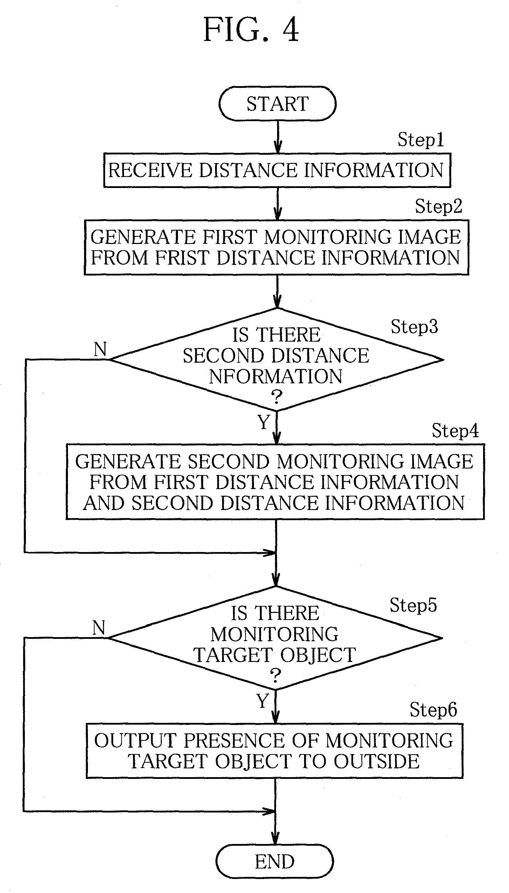

Subsequently, a laser monitoring method according to the embodiment of the present invention will be described by referring to FIG. 4. Here, FIG. 4 is a flowchart illustrating the laser monitoring method according to the embodiment of the present invention. Regarding the illustrated flowchart, the above-described control device 3 executes processing. The same reference numerals are given to the same components as those in the above-described laser monitoring device 1 and duplicated explanation will be omitted.

The laser monitoring method according to the embodiment of the present invention is configured such that, as illustrated in FIG. 4, the laser light L is irradiated while scanning in the horizontal direction and in the vertical direction of the monitoring range S, the reflected light R of the laser light L is received and the received light information d8 is obtained, the distance information d9 of the intended target object M within the monitoring range S is calculated from the received light information d8, and the target object M is detected from the distance information d9, and if a plurality of pieces of the reflected light R are received from the same laser light L, two pieces of the received light information d8 are selected from the received light information d8 of the plurality of pieces of reflected light R and the first distance information d91 and the second distance information d92 are calculated, the first monitoring image I1 is generated on the basis of the first distance information d91, while the second monitoring image 12 is generated on the basis of the second distance information d92, and the target object M is detected from both the first monitoring image I1 and the second monitoring image I2.

Specifically, the laser monitoring method according to this embodiment has a data receiving process Step 1 for receiving the distance information d9 (the first distance information d91 and the second distance information d92) from the laser distance measurement device 2, a first monitoring image generating process Step 2 for generating the first monitoring image I1 from the first distance information d91, a second distance information confirming process Step 3 for confirming presence of the second distance information d92, a second monitoring image generating process Step 4 for generating the second monitoring image 12 from the first distance information d91 and the second distance information d92, a monitoring target object confirming process Step 5 for confirming whether or not the intended target object M (monitoring target object) is present from the first monitoring image I1 and the second monitoring image 12, and an output-to-outside process Step 6 for outputting presence to an outside if the intended target object M (monitoring target object) is detected.

At the second distance information confirming process Step 3, if the second distance information d92 is not present (N), the second monitoring image generating process Step 4 is omitted, and the routine proceeds to the monitoring target object confirming process Step 5. At this time, at the monitoring target object confirming process Step 5, it is confirmed whether or not the intended target object M (monitoring target object) is present only from the first monitoring image I1. If the second distance information d92 is present (Y) at the second distance information confirming process Step 3, the routine proceeds to the second monitoring image generating process Step 4.

Moreover, at the monitoring target object confirming process Step 5, if the intended target object M (monitoring target object) is not present (N), the output-to-outside process Step 6 is omitted, and the processing is finished. Moreover, at the monitoring target object confirming process Step 5, if the intended target object M (monitoring target object) is present (Y), the routine proceeds to the output-to-outside process Step 6. Even if the intended target object M (monitoring target object) is not present, display of the non-presence may be output to the monitoring monitor 12.

In the output-to-outside process Step 6, the detected target object M may be framed by conspicuous color such as red, yellow or the like on the first monitoring image I1 or on the second monitoring image 12, for example, or detection of the target object M may be notified by an alarm, a revolving light or the like.

Assuming that one session of scanning of the laser light L in the horizontal direction of the monitoring range S is referred to as 1 scan and that scanning of the entire monitoring range S by repeating the scan while performing swing in the vertical direction is referred to as 1 frame, it is preferable that the above-described first monitoring image generating process Step 2 to output-to-outside process Step 6 are performed for each frame.

Moreover, as described above, in the laser monitoring method according to this embodiment, if the part having the second distance information d92 and the part not having it are mixed within the monitoring range S, it may be so configured that the second monitoring image 12 is generated by using the second distance information d92 for the part having the second distance information d92 and by using the first distance information d91 for the part not having the second distance information d92.

Moreover, as described above, if the second monitoring range S2 for which presence of the second distance information d92 is to be detected is present within the monitoring range S, the second monitoring image 12 may be generated by extracting only the second distance information d92 in the second monitoring range S2. At this time, the second monitoring image 12 is preferably generated by using the first distance information d91 for the part other than the second monitoring range S2.

According to the above-described laser monitoring method and laser monitoring device 1 of the present invention, even if a plurality of pieces of reflected light R are received from the same laser light L, by configuring such that the two pieces of distance information d9 (the first distance information d91 and the second distance information d92) are selected and the first monitoring image I1 and the second monitoring image 12 are generated on the basis of the first distance information d91 and the second distance information d92, there is no need of processing whether or not to employ either distance information d9, but the intended target object M can be easily detected.

It is needless to say that the present invention is not limited to the above-described embodiment but is capable of various changes within a range not departing from the gist of the present invention.

### Explanation of Reference Signs

- 1: laser monitoring device
- 2: laser distance measurement device
- 3: control device

## Claims

1. A laser monitoring method in which a laser light is irradiated while scanning in a horizontal direction and in a vertical direction of a monitoring range, reflected light of the laser light is received and received light information is obtained, distance information of a target object within the monitoring range is calculated from the received light information, and an intended target object is detected from the distance information, wherein
if a plurality of pieces of reflected light are received from the same laser light,
two pieces of received light information are selected from the received light information of the plurality of pieces of reflected light and first distance information and second distance information are calculated;
a first monitoring image is generated on the basis of the first distance information;
a second monitoring image is generated on the basis of the second distance information; and
the target object is detected from both the first monitoring image and the second monitoring image.

2. The laser monitoring method according to claim 1, wherein
if a part having the second distance information and a part not having the same are mixed within the monitoring range, the second monitoring image is generated by using the second distance information for the part having the second distance information and by using the first distance information for the part not having the second distance information.

3. The laser monitoring method according to claim 1 or 2, wherein
if a second monitoring range for which presence of the second distance information is to be detected is present within the monitoring range, the second monitoring image is generated by extracting only the second distance information in the second monitoring range.

4. A laser monitoring device comprising a laser distance measurement device which scans and irradiates a laser light in a horizontal direction and in a vertical direction of a monitoring range, receives reflected light of the laser light and obtains received light information and calculates distance information of a target object within the monitoring range from the received light information and a control device for detecting an intended target object from the distance information, wherein
if a plurality of pieces of reflected light are received from the same laser light, the laser distance measurement device selects two pieces of received light information from the received light information of the plurality of pieces of reflected light and calculates first distance information and second distance information; and
the control device generates a first monitoring image on the basis of the first distance information, generates a second monitoring image on the basis of the second distance information, and detects the target object from both the first monitoring image and the second monitoring image.

5. The laser monitoring device according to claim 4, wherein
if a part having the second distance information and a part not having the same are mixed within the monitoring range, the control device generates the second monitoring image by using the second distance information for the part having the second distance information and by using the first distance information for the part not having the second distance information.

6. The laser monitoring device according to claim 4 or 5, wherein
if a second monitoring range for which presence of the second distance information is to be detected is present within the monitoring range, the control device generates the second monitoring image by extracting only the second distance information in the second monitoring range.
